**Europäisches Patentamt**

**European Patent Office**

**Office européen des brevets**

(19)

(11) **EP 1 069 438 A1**

(12) **EUROPÄISCHE PATENTANMELDUNG**

(43) Veröffentlichungstag:
17.01.2001 Patentblatt 2001/03

(51) Int Cl.⁷: **G01S 7/40**, G01F 23/284

(21) Anmeldenummer: 99113685.4

(22) Anmeldetag: 15.07.1999

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **ENDRESS + HAUSER GMBH + CO.**
**D-79689 Maulburg (DE)**

(72) Erfinder:
• **Lalla, Robert, Dr.**
**79541 Lörrach (DE)**

• **Müller, Roland**
**79585 Steinen (DE)**
• **Sinz, Michael**
**79589 Binzen (DE)**
• **Spanke, Dietmar, Dr.**
**79585 Steinen (DE)**

(74) Vertreter: **Andres, Angelika**
**PatServ-Zentrale Patentabteilung,**
**Endress + Hauser (Deutschland) Holding GmbH,**
**Postfach 2222**
**79574 Weil/Rhein (DE)**

(54) **Verfahren und Vorrichtung zur hochgenauen Bestimmung des Füllstandes eines Füllguts in einem Behälter**

(57)    Die Erfindung bezieht sich auf ein Verfahren zur hochgenauen Bestimmung des Füllstands (q) eines Füllguts (4) in einem Behälter (2), wobei Meßsignale in Richtung der Oberfläche (5) des Füllguts (4) ausgesendet und an der Oberfläche (5) als Echosignale reflektiert werden und wobei durch Auswertung der Amplitudenwerte (A) und der Phasenwerte (φ) der reflektierten Echosignale der Füllstand (q) in dem Behälter (2) über ein Impulslaufzeitverfahren ermittelt wird. Weiterhin wird eine zur Durchführung des Verfahrens geeignete Vorrichtung vorgeschlagen.

Der Erfindung liegt die Aufgabe zugrunde, ein Verfahren und eine Vorrichtung vorzuschlagen, die hochgenaue Füllstandsmessungen in Behältern (2) selbst bei Auftreten von Mehrwegeausbreitung bzw. Mehrmodenausbreitung ermöglichen.

Die Aufgabe wird dadurch gelöst, daß Fehler, die bei der Ermittlung des Füllstandes (q) auftreten und die durch Störsignale verursacht werden, die mit den regulär an der Oberfläche (5) des Füllguts (4) reflektierten Echosignalen konstruktiv oder destruktiv interferieren, kompensiert werden.

**Fig. 1**

EP 1 069 438 A1

**Beschreibung**

Die Erfindung bezieht sich auf ein Verfahren zur hochgenauen Bestimmung des Füllstands eines Füllguts in einem Behälter, wobei Meßsignale in Richtung der Oberfläche des Füllguts ausgesendet und an der Oberfläche als Echosignale reflektiert werden und wobei durch Auswertung der Amplituden- und Phasenwerte der reflektierten Echosignale der Füllstand in dem Behälter über ein Impulslaufzeitverfahren ermittelt wird. Angewendet werden kann sowohl das Pulsradar-Verfahren als auch das FMCW-Verfahren, bei dem kontinuierliche Wellen periodisch linear, z. B. mit einer Sägezahnspannung, frequenzmoduliert sind.

Weiterhin bezieht sich die Erfindung auf eine Vorrichtung zur hochgenauen Bestimmung des Füllstands eines Füllguts in einem Behälter.

Impulslaufzeitverfahren nutzen die physikalische Gesetzmäßigkeit aus, wonach die Laufstrecke gleich dem Produkt aus Laufzeit und Ausbreitungsgeschwindigkeit ist. Im Falle der Füllstandsmessung entspricht die Laufstrecke dem doppelten Abstand zwischen Antenne und Oberfläche des Füllguts. Das eigentliche Nutzechosignal und dessen Laufzeit werden anhand der sog. Echofunktion bzw. der digitalen Hüllkurve bestimmt, wobei die Hüllkurve die Amplituden der Echosignale als Funkton des Abstandes 'Antenne - Oberfläche des Füllguts' wiedergibt. Der Füllstand selbst ergibt sich dann aus der Differenz zwischen dem bekannten Abstand der Antenne von dem Boden des Behälters und dem durch die Messung bestimmten Abstand der Oberfläche des Füllguts von der Antenne.

In der DE 31 07 444 A1 wird ein hochauflösendes Impulsradarverfahren beschrieben. Ein Generator erzeugt erste Mikrowellenpulse und strahlt sie über eine Antenne mit einer vorgegebenen Sende-Wiederholrate in Richtung der Oberfläche des Füllguts aus. Ein weiterer Generator erzeugt Referenz-Mikrowellenpulse, die gleich den ersten Mikrowellenpulsen sind, sich von diesen jedoch in der Wiederholrate geringfügig unterscheiden. Das Echosignal und das Referenzsignal werden gemischt. Am Ausgang des Mischers steht ein Zwischenfrequenzsignal an. Das Zwischenfrequenzsignal hat den gleichen Verlauf wie das Echosignal, ist gegenüber diesem jedoch um einen Zeitdehnungsfaktor gestreckt, der gleich einem Quotienten aus der Sende-Wiederholrate und der Frequenzdifferenz von ersten Mikrowellenpulsen und Referenz-Mikrowellenpulsen ist. Bei einer Sende-Wiederholrate von einigen Megahertz, einer Frequenzdifferenz von wenigen Hertz und einer Mikrowellenfrequenz von einigen Gigahertz liegt die Frequenz des Zwischenfrequenzsignals unterhalb von 100 kHz. Der Vorteil der Transformation auf die Zwischenfrequenz ist, daß relativ langsame und damit kostengünstige elektronische Bauteile zur Signalerfassung und/oder Signalauswertung verwendet werden können.

Die Signalauswertung erfolgt über die sog. Hüllkurvenauswertung. Die Hüllkurve selbst ist das Ergebnis einer Gleichrichtung, optional einer Logarithmierung und einer Digitalisierung der Zwischenfrequenz. Die Entfernungsbestimmung erfolgt über die Bestimmung des Abstandes des Nutzechosignals, das den Füllstand repräsentiert, zu einem Referenzsignal. Die Anzahl der Abtastpunkte zwischen den beiden Maxima bei konstanter Abtastzeit ist direkt proportional zum Abstand 'Antenne - Oberfläche des Füllguts'.

Um die Meßgenauigkeit zu erhöhen, ist es bereits bekannt geworden, zusätzlich zu den Maxima (Peaks), die Amplitudeninformation liefern, auch deren Phasenlagen zur Auswertung heranzuziehen. Hierzu wird die amplitudenmodulierte Zwischenfrequenz demoduliert und in ihre komplexen Bestandteile zerlegt. Erreicht wird dies z. B. durch die sog.

Quadraturdemodulation, d. h. die Zwischenfrequenz wird einmal mit einer Sinus-Schwingung (Q) und einmal mit einer Cosinus-Schwingung (I) multipliziert, wobei beide Schwingungen eine ähnliche Frequenz haben wie die Zwischenfrequenz. Die durch die Multiplikation entstehenden hohen Frequenzen werden mit einem Tießpaßfilter ausgefiltert. Das Hüllkurvensignal HK wird aus der Wurzel der Summe der Quadrate von I (Inphasekomponente) und Q (Quadraturkomponente) erhalten: $HK = \sqrt{I^2 + Q^2}$. Anschließend erfolgt die übliche Amplitudenauswertung; an den gefundenen Orten der Maxima wird zusätzlich die jeweilige Phasenlage und die Differenz der beiden Phasenlagen bestimmt. Der Abstand der Antenne von der Oberfläche des Füllguts setzt sich dann zusammen aus einem Anteil von ganzzahligen Wellenlängen, der sich aus der Amplitudenauswertung ergibt, und einem Phasenrest.

Die bekannten Verfahren liefern solange verläßliche Ergebnisse, wie sichergestellt ist, daß die von der Antenne empfangenen Signale ausschließlich an der Oberfläche des Füllguts reflektiert werden (Einfall und Reflexion erfolgen in Richtung der Normalen). Sobald die sog. Mehrwegeausbreitung auftritt, verschlechtert sich die Meßgenauigkeit. Mehrwegeausbreitung bedeutet, daß die Echosignale nicht nur das eigentliche Nutzsignal enthalten, sondern zusätzlich einen Störsignalanteil, der auf Retroreflexionen der Meßsignale an der Behälterwand oder an sonstigen im Behälterinnenraum befindlichen Einbauten zurückzuführen ist.

Bisherige Vorschläge zur Lösung dieses Problems beschränken sich darauf, das Auftreten von Störsignalen von vornherein auszuschließen. Gemäß einer ersten Ausgestaltung lassen sich unerwünschte Retroreflexionen dadurch verhindern, daß die Antenne so weit entfernt von der Behälterwand (oder einem anderen störenden Retroreflektor) positioniert wird, daß das Auftreffen von Meßsignalen auf diese 'Störretroreflektoren' verläßlich ausgeschlossen werden kann.

Die Nachteile dieser Umgehungsmöglichkeit liegen auf der Hand; insbesondere bei den beachtlichen Abmessungen der Lagerbehälter, wie sie z. B. in der Petrochemie verwendet werden, ist der nachträgliche Einbau, eine Reparatur oder ein Austausch des Füllstandsmeßgeräts im mittleren Bereich des Behälterdeckels wesentlich schwieriger zu bewerkstelligen als im Randbereich.

Hinzu kommt eine weitere Fehlerquelle bei der Messung des Füllstandes, die um so gravierender zu Buch schlägt, je weiter das Meßgerät vom Randbereich des Behälterdeckels entfernt ist: Üblicherweise haben die Deckel von großen Lagerbehältern, wie Lagertanks oder Silos, eine nach außen gekrümmte oder spitz zulaufende Form. Bauchen sich die Seitenwände des Behälters aus, was im Bereich des maximalen Füllstandes der Behälter durchweg zu beobachten ist, so wirkt sich die Absenkung des Deckels und damit die Änderung des Referenzabstandes 'Antenne - Behälterboden' im mittleren Bereich stärker aus als im Randbereich.

Weiterhin hat man bisher versucht, das Problem der Mehrwegeausbreitung dadurch in den Griff zu bekommen, daß eine Antenne mit optimierter Richtcharakteristik verwendet wird. Derartige auf den Einzelfall abgestimmte Antennen sind natürlich sehr teuer, was die Kosten für das Füllstandsmeßgerät in die Höhe treibt.

In bestimmten Anwendungsfällen ist es erforderlich, die Freifeldmessung zur Bestimmung des Füllstandes durch eine Messung unter Verwendung eines Schwallrohres zu ersetzen. Schwallrohre werden z. B. immer dann eingesetzt, wenn das Meßergebnis durch Wellenbildung des Füllguts innerhalb des Behälters verfälscht werden würde.

Wie bereits zuvor erwähnt, wird der Füllstand über die Laufzeit der elektromagnetischen Wellen auf der zweifachen Distanz 'Antenne - Oberfläche des Füllguts' ermittelt. Damit das Meßergebnis korrekt ist, muß daher die Ausbreitungsgeschwindigkeit der elektromagnetischen Wellen in dem Zwischenraum zwischen Antenne und Füllgut genau bekannt sein. Näherungsweise wird die Ausbreitungsgeschwindigkeit in einer Vielzahl der Applikationen mit der Ausbreitungsgeschwindigkeit in Luft gleichgesetzt. Diese Annahme ist jedoch nur zulässig, wenn die Querabmessungen des Raumes, in dem sich die elektromagnetischen Wellen ausbreiten, groß gegen die Wellenlänge ist.

Erfolgt die Messung des Füllstandes über ein Schwallrohr, so ist die zuvor genannte Annahme nur noch näherungsweise korrekt. Ein Rohr oder ein sonstiger Behälter mit kleinem Durchmesser, über den sich die Wellen ausbreiten, wirkt als Hohlleiter. Da die Ausbreitung von elektromagnetischen Wellen mit Lichtgeschwindigkeit nur für den Idealfall zutrifft, daß sich Wellenpakete ungestört im freien Raum fortpflanzen können, tritt in Hohlleitern Dispersion auf - die Ausbreitungsgschwindigkeit ist also abhängig von der Wellenlänge. Die für die Ausbreitung eines Wellenpakets maßgebliche Gruppengeschwindigkeit in einem Hohlleiter ist kleiner als die Lichtgeschwindigkeit.

Ist die Wellenlänge in der Größenordnung des Ausbreitungsraums, existieren mehrere ausbreitungsfähige Moden, die aufgrund der Dispersion unterschiedliche Ausbreitungsgeschwindigkeiten haben ($\rightarrow$ Mehrmodenausbreitung). Folge der Mehrmodenausbreitung ist das Auftreten von konstruktiven und destruktiven Interferenzen zwischen den Meßsignalen, was wiederum dazu führt, daß sich innerhalb eines kritischen Meßbereichs ein oszillierender Meßfehler dem eigentlichen Füllstands-Meßsignal überlagert und es verfälscht. Aufgrund der Oszillation kann der widersinnige Fall auftreten, daß z. B. trotz faktischer Füllstands-abnahme von der Meßapparatur ein steigender Füllstandswert angezeigt wird. Ein derart offensichtlicher Meßfehler ist natürlich völlig inakzeptabel.

Der kritische Meßbereich liegt übrigens zwischen der Laufstrecke Null und einer maximalen Laufstrecke, bei der der Meßfehler verschwindet, da die Wellenpakete soweit auseinander gelaufen sind, daß keine Interferenzen mehr auftreten. Diese maximale Laufstrecke ist von der Beschaffenheit des Hohlleiters und der verwendeten Frequenz der elektromagnetischen Wellen abhängig.

Wieder kann dieses Problem dadurch eingedämmt werden, daß qualitativ sehr hochwertige Hohlleiter zur Anwendung kommen. Zusätzlich muß die Antenne optimal auf den jeweiligen Durchmesser des Hohlleiters abgestimmt sein. Eine kostengünstige Lösung zeichnet sich aber gerade dadurch aus, daß die Rohre qualitativ nicht besonders hochwertig sein müssen und daß man weiterhin eine kostengünstige Antenne verwenden kann, die in der Lage ist, beliebige Innendurchmesser von als Hohleiter wirkenden Schwallrohren abzudecken.

Der Erfindung liegt die Aufgabe zugrunde, ein Verfahren und eine Vorrichtung vorzuschlagen, die hochgenaue Füllstandsmessungen in Behältern ermöglichen - unabhängig vom Auftreten von Mehrwegeausbreitung bzw. von Mehrmodenausbreitung.

Die Erfindung wird bezüglich des Verfahrens dadurch gelöst, daß Fehler, die bei der Ermittlung des Füllstandes auftreten und die durch Störsignale verursacht werden, die mit den regulär an der Oberfläche des Füllguts reflektierten Echosignalen konstruktiv oder destruktiv interferieren, kompensiert werden.

Ursache der Fehler, die infolge von Mehrwegeausbreitung auftreten, sind konstruktive bzw. destruktive Interferenzen zwischen dem eigentlichen Nutzechosignal, das an der Oberfläche des Füllguts reflektiert wird, und dem Anteil des Nutzechosignals, das von einem Retroreflektor, z. B. der Behälterwand, reflektiert wird. Ist x' der zurückgelegte Weg des eigentlichen Nutzechosignals, das an der Oberfläche des Füllguts reflektiert worden ist, und x'' der um $\Delta$x längere Wege des Nutzechosignals, das an einem sonstigen Retroreflektor, insbesondere an der Behälterwand, reflektiert worden ist, so treten Interferenzen auf, wenn die Wegedifferenz die Bedingung $\Delta x = n \cdot \lambda/2$ erfüllt, wobei n eine beliebige ganze Zahl ist. Die Maxima der beiden Signale liegen so dicht beieinander, daß das Auflösungsvermögen der Elektronik nicht ausreicht, die beiden Peaks voneinander zu trennen. Durch das erfindungsgemäße Verfahren lassen sich nunmehr diese Fehler sicher eliminiert, was in Zahlen ausgedrückt bedeutet, daß die Fehlertoleranzen im Bereich der Füllstandsmessung gegenüber den bislang bekannten Verfahren um eine Größenordnung reduziert werden. Dasselbe Problem tritt, wie an vorhergehender Stelle beschrieben, auch als Folge der Mehrmodenausbreitung von Wellenpaketen in Schwallrohren oder sonstigen die Wellenpakete führenden Behältern auf. Das erfindungsgemäße Verfahren ist daher auch bestens dazu geeignet, Meßfehler aufgrund von Mehrmodenausbreitung zu eliminieren.

Die Vorteile der erfindungsgemäßen Lösung sind einmal darin zu sehen, daß die Antenne auch im Randbereich des Behälters oder im Bereich eines sonstigen im Innenraum des Behälters befindlichen Retroreflektors positioniert werden kann, ohne daß die Störsignale die Meßergebnisse verfälschen. Der bislang erforderliche Mindestabstand von einem Störreflektor kann also nunmehr problemlos unterschritten werden. Da es möglich wird, den Anteil der Störsignale gezielt aus dem Nutzechosignal zu eliminieren, kann darüber hinaus eine Antenne zum Einsatz kommen, die zwar optimal an die Reflexionseigenschaften des jeweiligen Füllguts angepaßt sein kann, die aber keine optimierte Richtcharakteristik in Abhängigkeit von der jeweils gewünschten Montageposition aufweisen muß.

Im Fall der Mehrmodenausbreitung liegt der Vorteil gleichfalls bei erheblichen Kosteneinsparungen, da einerseits keine qualitativ hochwertigen Hohlleiter eingesetzt werden müssen; andererseits kann eine Antenne für eine Vielzahl von Hohlleitern bzw. Schwallrohren mit unterschiedlichen Dimensionierungen eingesetzt werden.

Gemäß einer vorteilhaften Weiterbildung des erfindungsgemäßen Verfahrens ist vorgesehen, daß zumindest innerhalb eines kritischen Füllstandsmeßbereichs, in dem die Störsignale erzeugt werden, zu ausgewählten Füllstandswerten ein Korrekturwert ermittelt und gespeichert wird.

Eine bevorzugte Ausgestaltung des Verfahrens sieht insbesondere vor, daß der Start-Füllstand gemessen wird; anschließend wird der Korrekturwert mit Null initialisiert wird; ausgehend von diesem Start-Füllstand wird zumindest der kritische Füllstandsmeßbereich z. B. sukzessive und schrittweise durchfahren; dann wird zu jedem ausgewählten Füllstandswert innerhalb des Füllstandsmeßbereichs ein Korrekturwert berechnet und abgespeichert.

Um die Anzahl der tatsächlich innerhalb des kritischen Füllstandsmeßbereichs gemessenen Werte auf ein Mindestmaß reduzieren zu können, schlägt eine vorteilhafte Ausgestaltung des erfindungsgemäßen Verfahrens vor, daß für eine lückenlose Bereitstellung der Korrekturwerte die Korrekturwerte zwischen zwei z. B. aufeinanderfolgenden Füllstandswerten jeweils interpoliert werden.

Eine besonders vorteilhafte Ausgestaltung des erfindungsgemäßen Verfahrens sieht vor, daß die Korrekturwerte bei aufeinanderfolgenden Füllstandswerten $q_K$ , $q_{K+1}$ folgendermaßen ermittelt werden: Sei $q_K = q_o$ der Start-Füllstand. Beim Start-Füllstand wird der Korrekturwert mit einem vorgegebenen Wert, z. B. mit Null, initialisiert; anschließend wird beim geänderten Füllstand $q_{K+1}$ die Differenz des korrigierten Amplitudenentfernungswerte A'($q_k$) und des Phasenentfernungswertes errechnet. Damit wird für jeden nachfolgend angefahrenen Füllstand ein neuer Korrekturwert bestimmt und abgespeichert. Die Berechnung des neuen Korrekturwertes erfolgt vorzugsweise nach folgender Formel:

$$K(q_{K+1}) = \varphi(q_{K+1}) - A'(q_{K+1}) = \varphi(q_{K+1}) - A(q_{K+1}) - K(q_{K+1}).$$

Die erfindungsgemäße Ausgestaltung nutzt den Umstand aus, daß die Phasenauswertung in großen Bereichen wesentlich empfindlicher ist und damit genauere Meßergebnisse liefert als die Amplitudenauswertung. Treten bei der Amplitudenauswertung infolge von Mehrwegeausbreitung oder Mehrmodenausbreitung bereits relativ große Meßfehler auf, so sind die Meßfehler, die die Phasenauswertung liefert, noch relativ gering. Erst wenn der Meßfehler in der Amplitudenauswertung größer als λ/4 ist (was beispielsweise bei einer Frequenz von 6.3 GHz einem Meßfehler von 12 mm entspricht) tritt bei der Phasenauswertung ein Phasensprung auf, der einen Meßfehler von 24 mm verursacht. Der Fehler aus der Phasenauswertung ist im Bereich eines Phasensprungs damit doppelt so groß wie der Fehler aus der Amplitudenauswertung. Da es das erfindungsgemäße Verfahren schafft, derartige Phasensprünge zu vermeiden, erreicht man die angestrebte hohe Meßgenauigkeit von ca. 1 mm in der Bestimmung des Füllstandes.

Ist jedem Füllstand innerhalb des Meßbereichs, in dem Mehrwegeausbreitung bzw. Mehrmodenausbreitung zu befürchten ist, ein Korrekturwert zugeordnet, ist es nachfolgend möglich, gemessene Füllstandswerte entsprechend zu korrigieren. Keine Probleme bereitet nunmehr der bislang kritische Fall, daß das Füllstandsmeßgerät aus irgendeinem Grund ausgeschaltet wird. Sind die Korrekturwerte im kritischen Füllstandsmeßbereich lückenlos bekannt, so wird nach dem Einschalten des Meßgeräts derjenige Korrekturwert zur Korrektur des aktuell gemessenen Füllstandes herangezogen, der zuvor zu dem entsprechenden Füllstand ermittelt und abgespeichert worden ist.

Dennoch kann es vorkommen, daß das Meßgerät zu einem Zeitpunkt ausgeschaltet wird, zu dem die Korrekturwerte noch nicht über den gesamten kritischen Füllstandsmeßbereich vorliegen. Hier sind zwei Fälle zu unterscheiden: Ist sichergestellt, daß sich der Füllstand während der Ausschaltdauer des Meßgerätes nicht geändert hat, so sieht eine vorteilhafte Ausgestaltung des erfindungsgemäßen Verfahrens vor, daß der vor dem Ausschaltvorgang zuletzt abgespeicherte Korrekturwert zur Initialisierung herangezogen wird.

Für den Fall, daß die Korrekturwerte im kritischen Füllstandsmeßbereich nicht lückenlos bekannt sind und wenn darüber hinaus nicht ausgeschlossen werden kann, daß sich der Füllstand während der Ausschaltdauer geändert hat, so wird nach einem Ausschaltvorgang des Füllstandsmeßgeräts der Korrekturwert mit Null initialisiert; zu jedem Korrekturwert wird zusätzlich ein Statuswert abgespeichert, der Auskunft über die Verläßlichkeit des jeweiligen Korrekturwerts gibt. Diese Statuswerte können beispielsweise lauten: 'Sicher', 'Unsicher', 'Unbestimmt'. Im Laufe der weiteren Messungen werden die ermittelten Korrekturwerte an die bereits gespeicherten Korrekturwerte angepaßt, wobei die neu ermittelten Korrekturwerte gegebenenfalls korrigiert werden.

Eine Variante des erfindungsgemäßen Verfahrens sieht vor, daß anhand des ermittelten Korrekturwertes ein eindeutiger Phasenkorrekturwert (P(q)) bestimmt wird, wobei $P = n \cdot \lambda/2$ mit $n \in Z$ ist, und daß der Phasenentfernungswert entsprechend dem eindeutigen Korrekturwert korrigiert wird. Weiterhin wird vorgeschlagen, daß Grauzonen definiert werden, an denen nach einem Abschaltvorgang und kleinem Korrekturwert (K(q)) kein eindeutiger Phasenkorrekturwert definiert ist.

Die Erfindung wird anhand der nachfolgenden Zeichnungen näher erläutert. Es zeigt:

Fig. 1: eine schematische Darstellung einer ersten Ausführungsform der erfindungsgemäßen Vorrichtung,

Fig. 2: eine schematische Darstellung einer zweiten Ausführungsform der erfindungsgemäßen Vorrichtung,

Fig. 3: ein Diagramm, das die Meßfehler aus der Amplitudenauswertung und der Phasenauswertung bei unterschiedlichen Füllständen zeigt,

Fig. 4: ein Flußdiagramm zur Bestimmung der Korrekturwerte gemäß einer ersten Ausgestaltung,

Fig. 5: ein Flußdiagramm zur Bestimmung der Korrekturwerte gemäß einer zweiten Ausgestaltung,

Fig. 6: eine schematische Darstellung der abgespeicherten Korrekturwerte K(q) in Abhängigkeit vom Füllstand (q) und

Fig. 7: eine schematische Darstellung der Korrekturwerte nach einer Abschaltung des Füllstandsmeßgeräts.

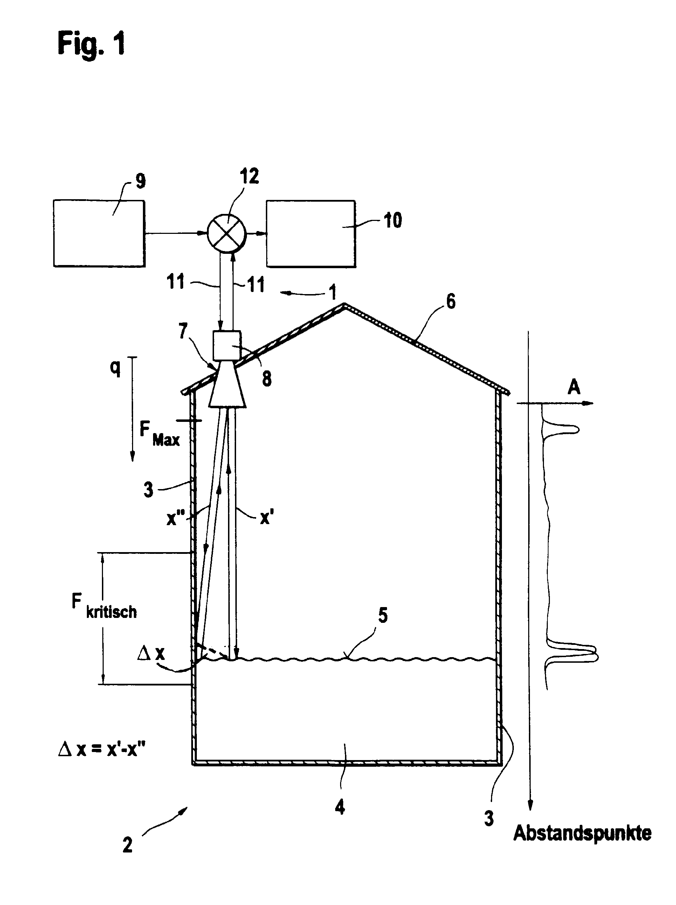

Fig. 1 zeigt eine schematische Darstellung einer ersten Ausführungsform der erfindungsgemäßen Vorrichtung. Ein Füllgut 4 ist in einem Behälter 2 gelagert. Zur Bestimmung des Füllstandes F dient das Füllstandsmeßgerät 1, das in einer Öffnung 7 im Randbereich des Deckels 6 montiert ist. Über die Antenne 8 werden in der Sendeschaltung 9 erzeugte Sendesignale, insbesondere Mikrowellen, in Richtung der Oberfläche 5 des Füllguts 4 abgestrahlt. An der Oberfläche 5 werden die Sendesignale teilweise reflektiert. Die reflektierten Echosignale werden in der Empfangs-/ Auswerteschaltung 10 empfangen und ausgewertet. Die korrekte Taktung von Absendung der Sendesignale und Empfang der Echosignale erfolgt über die Sende-Empfangsweiche 12.

Befindet sich der momentane Füllstand q innerhalb eines kritischen Füllstands-Meßbereiches $F_{kritisch}$, so tritt Mehrwegeausbreitung auf, d. h., die empfangenen Echosignale enthalten neben den regulär an der Oberfläche 5 des Füllguts 4 reflektierten Signalen auch Störsignale, die nicht an der Oberfläche 5 des Füllguts 4, sondern an der Behälterwand 3 oder an sonstigen im Behälter 2 befindlichen Einbauten reflektiert worden sind. Bei den Einbauten kann es sich beispielsweise um ein Rührwerk handeln. Ist die Wegedifferenz $\Delta x = x' - x''$ zwischen den regulär reflektierten Echosignalen und den Störsignalen gleich einem ganzzahligen Vielfachen von $\pm \lambda/2$, so treten konstruktive und destruktive Interferenzen auf. Als Folge der Interferenzen zeigen sich in der Hüllkurve Füllstands-Echosignale, die so dicht beieinander liegen, daß sie von der üblicherweise verwendeten Auswerteschaltung nicht mehr aufgelöst werden. Die Echosignale sind in der Fig. 1 gleichfalls schematisch in Abhängigkeit von der Laufstrecke (in Abtastpunkten) dargestellt. Mittels des erfindungsgemäßen Verfahren bzw. der erfindungsgemäßen Vorrichtung werden Meßfehler aufgrund von Amplitudenschwankungen eliminiert.

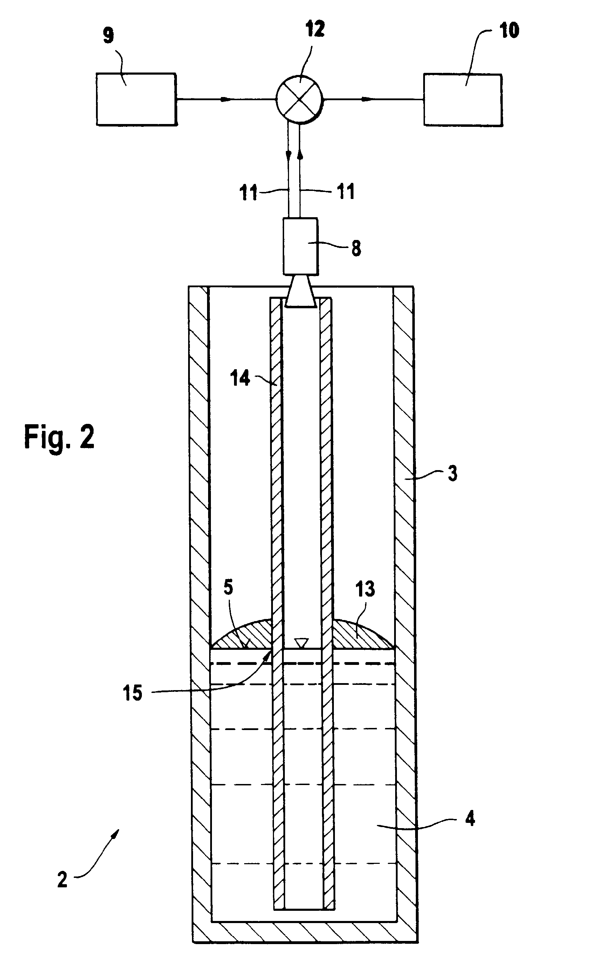

Während Fig. 1 die Messung im Freifeld wiedergibt, zeigt Fig. 2 eine schematische Darstellung einer zweiten Ausführungsform der erfindungsgemäßen Vorrichtung, bei der die Messung über ein Schwallrohr 14 erfolgt. Das Schwallrohr verhält sich -physikalisch gesehen- wie ein Hohlleiter. Das Schwallrohr 14 ist durch eine Öffnung 15 eines Schwimmdaches 13 geführt und reicht bis in die Nähe des Bodens des Behälters 2. Ein Schwimmdach 13 kommt übrigens bevorzugt zum Einsatz, wenn die Ausbildung eines explosiven Gasraumes über dem Füllgut 4 vermieden werden soll. Während im Falle der Freifeldausbreitung der elektromagnetischen Wellen die Mehrwegeausbreitung für die Störsignale im reflektierten Füllstandsechosignal verantwortlich ist, verursacht im Falle der Schwallrohrmessung die Mehrmodenausbreitung die Störsignale. Der Einfluß beider Störsignale auf die Güte des Füllstandsmeßwertes läßt sich mit Hilfe der erfindungsgemäßen Lösung elimieren.

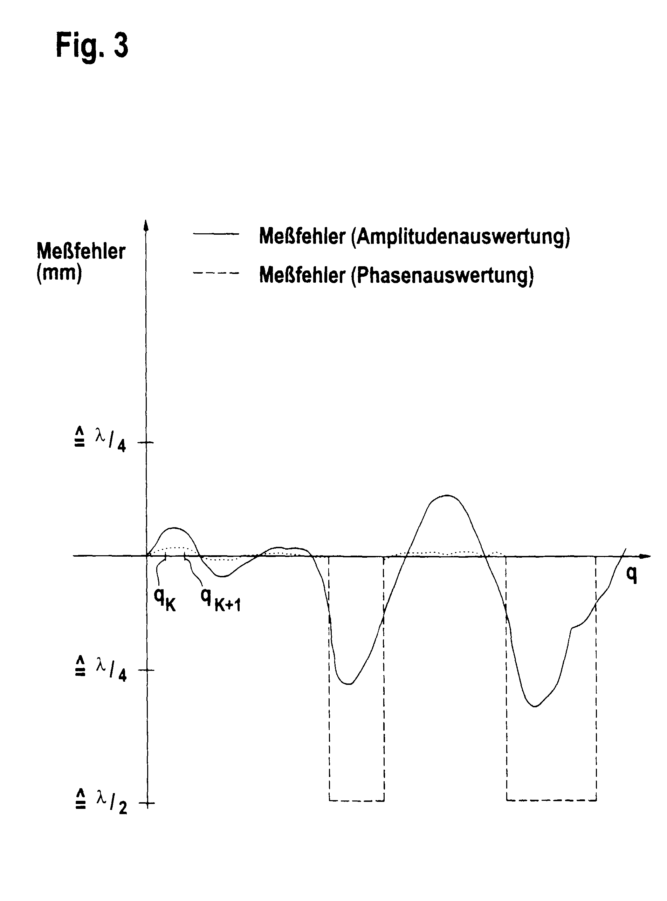

Fig. 3 zeigt ein Diagramm, das die Meßfehler, die sich aus der Amplitudenauswertung und der Phasenauswertung ergeben, in Abhängigkeit von dem jeweiligen Füllstand darstellt. Die durchgezogene Linie kennzeichnet die Meßfehler, die anhand der Amplitudenauswertung ermittelt worden sind; die gestrichelte Linie gibt die Meßfehler aus der entsprechenden Phasenauswertung wieder. Klar ersichtlich ist, daß die Phasenfehler wesentlich unempfindlicher gegen Mehrwege- bzw. Mehrmodenausbreitung sind als die entsprechenden Amplitudenmeßfehler. Gravierende Meßfehler treten bei der Phasenauswertung erst auf, wenn der Meßfehler, der sich aus der Amplitudenauswertung ergibt, einen gewissen Grenzwert überschreitet. Dieser Grenzwert entspricht einem Wert von $\pm\lambda/4$. Bei einer Wellenlänge der Meßsignale von 6.3 GHz entspricht dieser Grenzwert einem Meßfehler von 12 mm bei der Bestimmung des Füllstandes. Bis zu diesem Grenzwert erreicht man durch die Auswertung der Phasen der Echosignale eine sehr hohe Genauigkeit. Um den sprunghaften Anstieg des Meßfehlers in der Phasenauswertung zu vermeiden, dient die nachfolgend anhand eines Flußdiagramms beschriebene vorteilhafte Weiterbildung des erfindungsgemäßen Verfahrens.

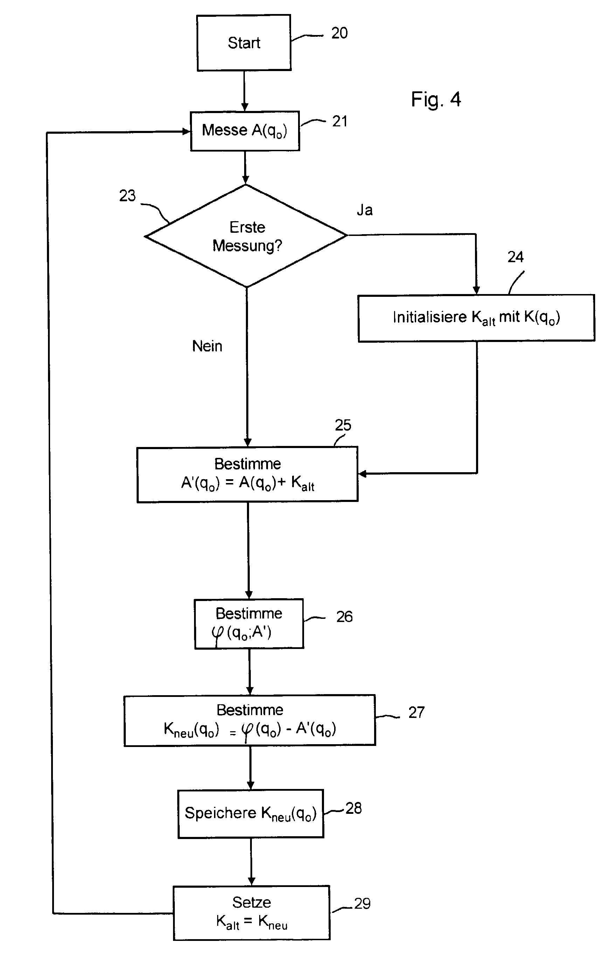

In Fig. 4 ist ein Flußdiagramm zur Bestimmung der Korrekturwerte K (q) gemäß einer ersten Ausgestaltung angegeben. Diese Korrekturwerte K(q) erlauben es, einen in einem Behälter 2 gemessenen Füllstandswert derart zu korrigieren, daß Störsignale, die sich dem eigentlichen Füllstandsechosignal aufgrund von Mehrwegeausbreitung bzw. Mehrmodenausbreitung überlagern, eliminiert werden.

Prinzipiell sind relativ große Meßfehler zu erwarten, wenn das Auflösungsvermögen des Füllstandsmeßgeräts nicht ausreicht, um die die Lage zweier eng beieinander liegender Maxima der Amplitudenauswertung genau zu bestimmen. Dies ist - wie bereits an vorhergehender Stelle beschrieben - der Fall, sobald Mehrwegeausbreitung im Freifeld bzw. Mehrmodenausbreitung im Schwallrohr auftritt: Störsignale interferieren konstruktiv und destruktiv mit dem eigentlichen Füllstandsechosignal. Anstelle von einem Peak, der den Füllstand repräsentiert, erscheinen zwei Peaks, was sich bei nicht ausreichendem Auflösungsvermögen des Füllstandsmeßgeräts in einer Verbreiterung bzw. in der Schwankung des Amplitudenmaximums niederschlägt.

Das Programm läuft folgendermaßen ab: Nach dem Programmstart bei Punkt 20, wird unter dem Programmpunkt 21 die aktuelle Entfernung $A(q_o)$ zum Füllstand $q_o$ gemessen. Handelt es sich um die erste Meßwertaufnahme überhaupt, was unter dem Programmpunkt 23 geprüft wird, so wird der Korrekturwert $K_{alt}$ = K(q) mit dem dazu passenden Wert der gespeicherten Tabelle (K $(q_o)$ initialisiert (Programmpunkt 24). Vor der ersten Inbetriebnahme ist diese Tabelle übrigens mit Null oder einem sonstigen Wert initialisiert worden. Daher ist jeder Status unbestimmt. Unter dem Programmpunkt 25 wird der korrigierte Entfernungswert aus der Amplitudenauswertung $A'(q_o)$ bestimmt. Dieser geht bei Punkt 26 in die Phasenauswertung ein. Unter dem Programmpunkt 27 wird zum Füllstand $q_o$ ein neuer Korrekturwert $K_{neu}(q_o)$ nach folgender Formel bestimmt:

$$K_{neu}(q_o) = \varphi(q_o) - A'(q_o) = \varphi(q_o) - A(q_o) - K_{alt}.$$

Der neue Korrekturwert $K_{neu}(q_o)$ wird anschließend abgespeichert (Programmpunkt 28). Bei Punkt 29 wird $K(q_o) = K_{neu}(q_o)$ gesetzt. Der ermittelte und gespeicherte Korrekturwert gibt Aufschluß darüber, wie ein gemessenes Füllstandsechosignal unter den gegebenen Verhältnissen im Behälter 2 bzw. im Schwallrohr 13 korrigiert werden muß, um eine hochgenaue Information über den aktuellen Füllstand q des Füllguts 4 in dem Behälter 2 zu liefern.

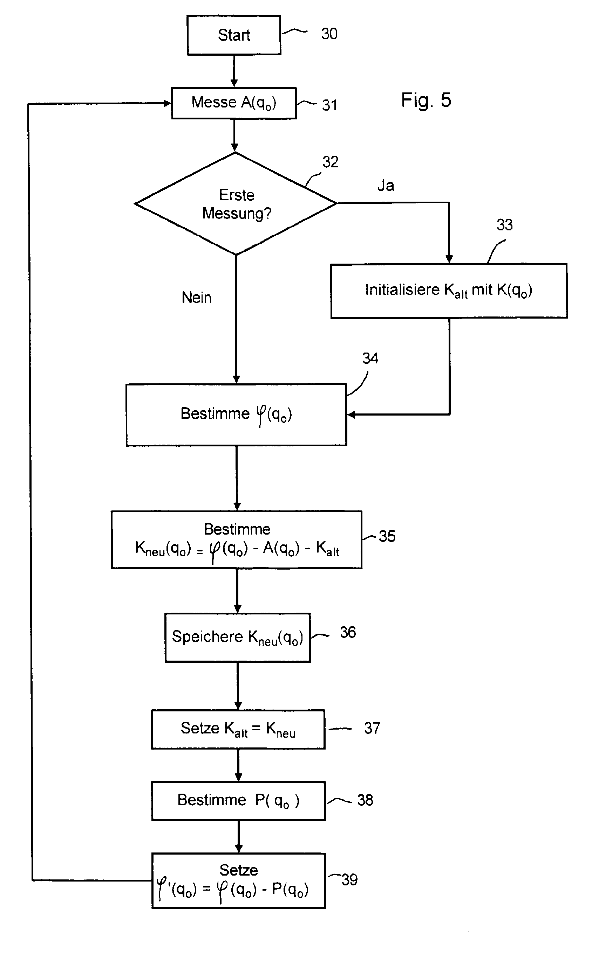

In Fig. 5 ist ein Flußdiagramm zur Bestimmung der Korrekturwerte K (q) gemäß einer zweiten Ausgestaltung wiedergegeben. Auch in diesem Fall erlauben es die Korrekturwerte K(q), einen in einem Behälter 2 gemessenen Füllstandswert derart zu korrigieren, daß Störsignale, die sich dem eigentlichen Füllstandsechosignal aufgrund von Mehrwegeausbreitung bzw. Mehrmodenausbreitung überlagern, eliminiert werden. Während im ersten Fall die Korrekturwerte K(q) in der Einheit von Abtastpunkten oder in einer sonstigen Entfernungseinheit angegeben sind, werden im vorliegenden zweiten Fall entweder Korrekturwerte K(q), die Anzahl der korrigierten Wellenlängen $\lambda$ oder die Phasenkorrekturwerte P(q) ermittelt und abgespeichert.

Nach dem Programmstart bei Punkt 30 wird bei Punkt 31 die aktuelle Entfernung A $(q_o)$ zum Füllstand $q_o$ gemessen. Handelt es sich um die erste Meßwertaufnahme überhaupt, was unter dem Programmpunkt 32 geprüft wird, so wird der Korrekturwert K(q) mit dem dazu passenden Wert der gespeicherten Tabelle K $(q_o)$ initialisiert (Programmpunkt 33). Vor der ersten Inbetriebnahme ist diese Tabelle übrigens mit Null oder einem sonstigen vorgegebenen Wert initialisiert worden. Daher ist jeder Status unbestimmt. Unter dem Programmpunkt 34 wird der Entfernungswert aus der Phasenauswertung $\varphi(q_o)$ bei dem Füllstand $q_o$ ermittelt. Bei Punkt 35 wird zum Füllstand $q_o$ ein neuer Korrekturwert $K_{neu}(q_o)$ nach folgender Formel bestimmt:

$$K_{neu}(q_o) = \varphi(q_o) - A(q_o) - K_{alt}.$$

Der neue Korrekturwert $K_{neu}(q_o)$ wird anschließend abgespeichert (Programmpunkt 36). Bei Punkt 37 wird $K_{alt}(q_o) = K_{neu}(q_o)$ gesetzt. Der ermittelte und gespeicherte Korrekturwert $K_{neu}(q_o)$ gibt Aufschluß darüber, wie ein gemessenes Füllstandsechosignal unter den gegebenen Verhältnissen im Behälter 2 bzw. im Schwallrohr 13 korrigiert werden muß, um eine hochgenaue Information über den aktuellen Füllstand $q_o$ des Füllguts 4 in dem Behälter 2 zu liefern. Weiterhin wird unter dem Programmpunkt 38 ein Phasenkorrekturwert P($q_o$) ermittelt. Mit diesem wird unter Punkt 39 der korrigierte Entfernungswert $\varphi'(q_o)$ nach folgender Beziehung berechnet:

$$\varphi'(q_o) = \varphi(q_o) - P(q_o).$$

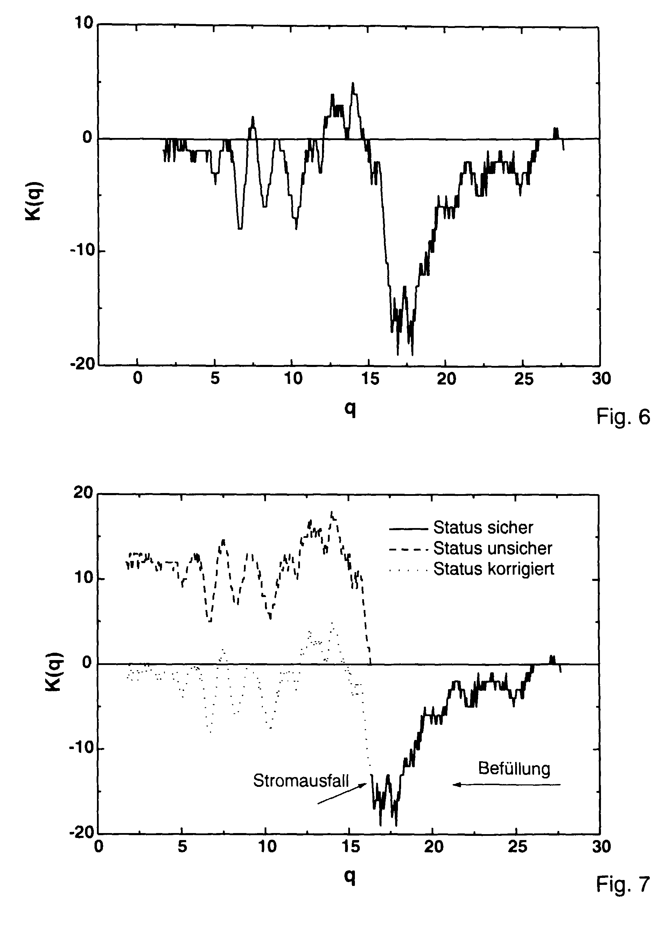

In Fig. 6 ist eine schematische Darstellung der abgespeicherten Korrekturwerte K(q) in Abhängigkeit vom Füllstand q zu sehen. Der Füllstand q ist der Wert, der sich aus der Auswertung der Hüllkurve ohne Korrektur ergibt. Die Punkte kennzeichnen die Füllstände q, an denen ein Korrekturwert vorzugsweise entsprechend dem in Fig. 3 dargestellten Flußdiagramm ermittelt worden ist. Die Meßpunkte liegen so dicht beisammen, daß die Korrekturwerte K(q) zwischen den gemessenen Füllständen interpoliert werden können. Jeder nachfolgend von dem Meßgerät angezeigte Füllstand q wird um den Korrekturwert K(q) korrigiert, wodurch Meßfehler elimiert werden, die durch Mehrwegeausbreitung oder Mehrmodenausbreitung während des Meßvorgangs verursacht worden sind. Mittels des erfindungsgemäßen Verfahrens bzw. der erfindungsgemäßen Vorrichtung ist es somit möglich, ein Meßgerät universell für hochgenaue Messung in Behältern oder Hohlleitern mit völlig unterschiedlicher Abmessung und Geometrie zu verwenden.

In Fig. 7 ist der bereits an vorhergehender Stelle beschriebene kritische Fall skizziert: Das Meßgerät wird zu einem Zeitpunkt ausgeschaltet, wenn noch nicht alle Korrekturwerte K(q) innerhalb des kritischen Füllstandsmeßbereichs vorliegen. Es kann darüber hinaus nicht ausgeschlossen werden, daß sich der Füllstand während der Ausschaltphase geändert hat.

Die Korrekturwerte im rechten Bereich der Kurve (durchgezogene Kurve) haben den Status 'sicher'. Sie wurden beispielsweise nach dem zuvorgenannten Verfahren bestimmt und abgespeichert. Bei einem Füllstand von ca. 16 m fällt der Strom aus. Nach dem Einschalten des Meßgeräts kann nicht garantiert werden, daß die nachfolgenden Messungen korrekt sind. Der Grund dafür liegt darin, daß der aus der Tabelle erhaltene Korrekturwert $K(q_o)$ noch nicht in einem vorherigen Meßzyklus bestimmt wurde. Der Status ist unbestimmt, also nicht bekannt, und der Wert von K ist ein beliebiger vorgegebener Wert, z. B. Null. Der nach der erneuten Inbetriebnahme des Meßgeräts ermittelte Verlauf der Kurve der Korrekturwerte ist im linken oberen Bereich des Diagramms gezeigt. Die gestrichelte Kurve gibt den Verlauf der Korrekturwerte K(q) ohne Stomausfall wieder. Um die daraus eventuell resultierenden Fehlmessungen zu verhindern, wird ein globaler Status und zu jedem Korrekturwert K(q) ein Statuswert gespeichert.

Im dargestellten Fall haben die Korrekturwerte im rechten Bereich den Status 'Sicher' (durchgezogene Kurve), die Korrekturwerte K(q) im linken oberen Bereich den Status 'Unsicher' (gestrichelte Kurve) und die Korrekturwerte im linken unteren Bereich den Status 'sicher Korrigiert' (gepunktete Kurve). Bisher nicht bestimmte Korrekturwerte besitzen den Status 'Unbestimmt' und den vorgegebenen Wert, vorzugsweise Null. Durch weitere Messungen werden die einzelnen Bereiche, die einen unterschiedlichen Status aufweisen, miteinander verschmolzen. Hierzu müssen gegebenenfalls die Korrekturwerte K(q) mit unterschiedlichen Statuswerten aneinander angepaßt werden.

**Bezugszeichenliste**

1    Füllstandsmeßgerät
2    Behälter
3    Behälterwand
4    Füllgut
5    Oberfläche des Füllguts
6    Behälterdeckel
7    Öffnung
8    Antenne
9    Sendeschaltung
10   Empfangs-/Auswerteschaltung
11   Verbindungsleitung
12   Sende-Empfangs-Weiche
13   Schwimmdach
14   Schwallrohr
15   Öffnung im Schwimmdach

$q, q_o$    Füllstand
K    Korrekturwert
$\varphi(q)$    Entfernungswert aus der Phasenauswertung

φ'(q)     korrigierter Entfernungswert aus der Phasenauswertung

P         Phasenkorrekturwert

A(q)      Entfernungswert aus der Amplitudenauswertung

A'(q)     korrigierter Entfernungswert aus der Amplitudenauswertung

S         Statuswert

λ         Wellenlänge

**Patentansprüche**

1. Verfahren zur hochgenauen Bestimmung des Füllstands eines Füllguts in einem Behälter, wobei Meßsignale in Richtung der Oberfläche des Füllguts ausgesendet und an der Oberfläche als Echosignale reflektiert werden und wobei durch Auswertung der Amplitudenwerte und der Phasenwerte der reflektierten Echosignale der Füllstand in dem Behälter über ein Impulslaufzeitverfahren ermittelt wird,
   **dadurch gekennzeichnet,**
   daß Fehler, die bei der Ermittlung des Füllstandes (q) auftreten und die durch Störsignale verursacht werden, die mit den regulär an der Oberfläche (5) des Füllguts (4) reflektierten Echosignalen konstruktiv oder destruktiv interferieren, kompensiert werden.

2. Verfahren nach Anspruch 1,
   **dadurch gekennzeichnet,**
   daß zumindest innerhalb eines kritischen Füllstandsmeßbereichs ($F_{kritisch}$), in dem die Störsignale erzeugt werden, zu ausgewählten Füllstandswerten (q) ein Korrekturwert (K(q)) ermittelt und gespeichert wird.

3. Verfahren nach Anspruch 1 oder 2,
   dadurch gekennzeichnet,

      daß der Start-Füllstand ($q_o$) gemessen wird,
      daß der Korrekturwert (K) mit Null initialisiert wird,
      daß ausgehend von diesem Start-Füllstand ($q_o$) zumindest der kritische Füllstandsmeßbereich ($FM_{kritisch}$) durchfahren wird und
      daß zu jedem ausgewählten Füllstandswert (q) innerhalb des Füllstandsmeßbereichs ($FM_{kritisch}$) ein Korrekturwert (K(q)) berechnet und abgespeichert wird.

4. Verfahren nach Anspruch 3,
   **dadurch gekennzeichnet,**
   daß für eine lückenlose Bereitstellung der Korrekturwerte die Korrekturwerte ($K(q_k)$, $K(q_{K+1})$ zwischen zumindest zwei Füllstandswerten ($q_K$, $q_{K+1}$) interpoliert werden.

5. Verfahren nach Anspruch 3 oder 4,
   **dadurch gekennzeichnet,**
   daß die Korrekturwerte ($K(q_k)$, $K(q_{K+1})$ bei aufeinanderfolgenden Füllstandswerten ($q_K = q_o$, $q_{K+1}$) folgendermaßen ermittelt werden:
   beim Start-Füllstand ($q_o$) wird der Korrekturwert ($K(q_o)$ initialisiert, so daß gilt,

      daß der korrigierte Amplitudenwert (A'($q_o$)= A($q_o$) + K($q_o$)) beim Start-Füllstand $q_o$ gleich A($q_o$) ist;
      beim Füllstand ($q_{K+1}$) wird die Differenz des korrigierten Amplitudenwertes (A'($q_{K+1}$)= A($q_{K+1}$)+ $K(q_K)$) und des Phasenwertes von Nutzechosignal und Referenzechosignal errechnet;
      sobald bei einem nachfolgend angefahrenen Füllstand ($q_K$ ; $q_K \neq q_o$) eine Abweichung zwischen den Differenzen der Amplitudenwerte und den Differenzen der Phasenwerte auftritt, wird die entsprechende Abweichung beim Füllstand ($q_K$) von der beim Füllstand ($q_{K+1}$) ermittelten Abweichung subtrahiert;
      für jeden nachfolgend angefahrenen Füllstand ($q_K$ ; $q_K \neq q_o$) wird ein neuer Korrekturwert K($q_{K+1}$) = φ($q_{K+1}$) - A'($q_{K+1}$) = φ($q_{K+1}$) - A($q_{K+1}$) - K($q_K$) bestimmt und abgespeichert.

6. Verfahren nach Anspruch 5,
   dadurch gekennzeichnet,
   daß der Korrekturwert (K($q_o$)) mit einem vorgegebenen Initialisierungswert oder mit dem zu $q_o$ gespeicherten Wert initialisiert wird.

**7.** Verfahren nach Anspruch 3, 4, 5 oder 6,
dadurch gekennzeichnet,

daß für den Fall, daß die Korrekturwerte (K(q)) im kritischen Füllstandsmeßbereich ($Q_{kritish}$) lückenlos bekannt sind, nach einem Abschalten des Meßgeräts derjenige Korrekturwert (K(q)) zur Korrektur des bestimmten Füllstandes herangezogen wird, der zu dem jeweiligen Füllstand (q) abgespeichert worden ist, und
daß für den Fall, daß die Korrekturwerte (K(q)) im kritischen Füllstandsmeßbereich ($FM_{kritisch}$) nicht lückenlos bekannt sind, nach einem Ausschalten des Füllstandsmeßgeräts (1) der vor dem Ausschaltvorgang zuletzt abgespeicherte Korrekturwert (K(q)) zur Initialisierung herangezogen wird, falls sichergestellt ist, daß sich in der Zwischenzeit der Füllstand (q) nicht geändert hat.

**8.** Verfahren nach Anspruch 3, 4 oder 5,
**dadurch gekennzeichnet,**

daß für den Fall, daß die Korrekturwerte (K(q)) im kritischen Füllstandsmeßbereich ($FM_{kritisch}$) nicht lückenlos bekannt sind und wenn nicht ausgeschlossen werden kann, daß sich der Füllstand (q) in der Zwischenzeit geändert hat, wird nach einem Ausschaltvorgang des Füllstandsmeßgeräts (1) ein Korrekturwert ($K'(q_{außerhalb})$) mit Null initialisiert;
daß zu jedem Korrekturwert ein Statuswert (S (q)) abgespeichert wird, der Auskunft über die Verläßlichkeit des jeweiligen Korrekturwerts (K(q)) gibt und
daß im Laufe der weiteren Messungen die ermittelten Korrekturwerte ($K'(_{außerhalb})$) an die bereits gespeicherten Korrekturwerte (K) angepaßt werden, wobei die neu ermittelten Korrekturwerte (K') gegebenenfalls korrigiert werden.

**9.** Verfahren nach Anspruch 2,
**dadurch gekennzeichnet,**

daß anhand des ermittelten Korrekturwertes (K(q)) ein eindeutiger Korrekturwert (P) bestimmt wird, wobei P = n • $\lambda$/2 mit n$\in$ Z ist, und
daß der Phasenentfernungswert ($\varphi$(q)) entsprechend dem eindeutigen Korrekturwert (P(q)) korrigiert wird.

**10.** Verfahren nach Anspruch 9,
**dadurch gekennzeichnet,**
daß Grauzonen definiert werden, an denen nach einem Abschaltvorgang und einem kleinen Korrekturwert (K(q)) kein eindeutiger Phasenkorrekturwert (P(q)) definiert ist.

**11.** Vorrichtung zur Durchführung des Verfahrens nach einem oder mehreren der Ansprüche 1 bis 8 oder 9 bis 10,
**dadurch gekennzeichnet,**

daß eine Sendeschaltung (9) zur Erzeugung von Meßsignalen, zumindest eine Antenne (8), die die Meßsignale in Richtung der Oberfläche (5) des Füllguts (4) aussendet und die die reflektierten Echowellen empfängt, und eine Empfangs-/Auswerteschaltung (10), die anhand der empfangenen Echosignale den Füllstand des Füllguts (4) in dem Behälter (2) mittels eines Impulslaufzeitverfahrens ermittelt, vorgesehen sind und
daß die Auswerteschaltung (10) Fehler, die bei der Ermittlung des Füllstandes (q) auftreten und die durch Störsignale verursacht werden, die mit den regulär an der Oberfläche (5) des Füllguts (4) reflektierten Echosignalen konstruktiv oder destruktiv interferieren, kompensiert.

**12.** Vorrichtung nach Anspruch 11,
**dadurch gekennzeichnet,**
daß ein Schwallrohr (14) vorgesehen ist, über das die Meßsignale auf die Oberfläche (5) des Füllguts (4) geleitet werden.

# Fig. 1

$\Delta x = x' - x''$

**9**

**12**

**10**

**11** **11**

**8**

**Fig. 2**

**14**

**3**

**5** **13**

**15**

**2**

**4**

# Fig. 3

Meßfehler
(mm)

—— Meßfehler (Amplitudenauswertung)

- - - Meßfehler (Phasenauswertung)

$\stackrel{\wedge}{=} \lambda/4$

$\stackrel{\wedge}{=} \lambda/4$

$\stackrel{\wedge}{=} \lambda/2$

$q_K$  $q_{K+1}$

q

Fig. 4

```
            ┌──────────┐
            │  Start   │─── 20
            └──────────┘
                 │
                 ▼
            ┌──────────┐
            │ Messe A(q_o) │─── 21
            └──────────┘
                 │
                 ▼
      23         ◇
        ╲      Erste          Ja
         ╲─  Messung? ──────────────────┐
               ◇                        │
               │                        ▼
               │            ┌───────────────────────┐
               │   24 ───   │ Initialisiere K_alt mit K(q_o) │
               │            └───────────────────────┘
            Nein                        │
               │                        │
               ▼                        │
      ┌─────────────────────┐ ◄─────────┘
      │      Bestimme        │─── 25
      │ A'(q_o) = A(q_o)+ K_alt │
      └─────────────────────┘
               │
               ▼
      ┌─────────────┐
      │  Bestimme    │─── 26
      │  φ(q_o;A')    │
      └─────────────┘
               │
               ▼
      ┌───────────────────────────┐
      │         Bestimme           │─── 27
      │ K_neu(q_o) = φ(q_o) - A'(q_o) │
      └───────────────────────────┘
               │
               ▼
      ┌──────────────────┐
      │ Speichere K_neu(q_o) │─── 28
      └──────────────────┘
               │
               ▼
      ┌──────────────┐
      │    Setze      │─── 29
      │ K_alt = K_neu  │
      └──────────────┘
```

- $20$ : Start
- $21$ : Messe $A(q_o)$
- $23$ : Erste Messung?
- $24$ : Initialisiere $K_{alt}$ mit $K(q_o)$
- $25$ : Bestimme $A'(q_o) = A(q_o) + K_{alt}$
- $26$ : Bestimme $\varphi(q_o; A')$
- $27$ : Bestimme $K_{neu}(q_o) = \varphi(q_o) - A'(q_o)$
- $28$ : Speichere $K_{neu}(q_o)$
- $29$ : Setze $K_{alt} = K_{neu}$

13

Fig. 5

$$\boxed{\text{Start}} \sim 30$$

$$\boxed{\text{Messe } A(q_o)} \sim 31$$

$$\diamond \text{ Erste Messung? } 32 \xrightarrow{\text{Ja}}$$

$$\boxed{\text{Initialisiere } K_{alt} \text{ mit } K(q_o)} \quad 33$$

Nein

$$\boxed{\text{Bestimme } \varphi(q_o)} \quad 34$$

$$\boxed{\begin{array}{c}\text{Bestimme}\\ K_{neu}(q_o) = \varphi(q_o) - A(q_o) - K_{alt}\end{array}} \sim 35$$

$$\boxed{\text{Speichere } K_{neu}(q_o)} \sim 36$$

$$\boxed{\text{Setze } K_{alt} = K_{neu}} \sim 37$$

$$\boxed{\text{Bestimme } P(q_o)} \sim 38$$

$$\boxed{\begin{array}{c}\text{Setze}\\ \varphi'(q_o) = \varphi(q_o) - P(q_o)\end{array}} \sim 39$$

Fig. 6

Fig. 7

# EP 1 069 438 A1

**Europäisches Patentamt**

## EUROPÄISCHER RECHERCHENBERICHT

**Nummer der Anmeldung**

EP 99 11 3685

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 44 07 369 A (GRIESHABER VEGA KG) 14. September 1995 (1995-09-14) | 1,11 | G01S7/40 G01F23/284 |
| Y | * Seite 2, Zeile 53 - Seite 3, Zeile 25 * | 12 | |
| A | * Seite 3, Zeile 66 - Seite 4, Zeile 24 * | 2 | |
| | --- | | |
| Y | DE 43 27 333 A (KROHNE MESSTECHNIK KG) 16. Februar 1995 (1995-02-16) | 12 | |
| A | * Spalte 1, Zeile 1 - Zeile 35 * * Spalte 1, Zeile 59 - Spalte 2, Zeile 2 * * Spalte 2, Zeile 7 - Zeile 51 * * Spalte 4, Zeile 24 - Spalte 5, Zeile 5 * * Spalte 5, Zeile 43 - Zeile 63 * | 2 | |
| | --- | | |
| A,D | DE 31 07 444 A (DORNIER SYSTEM GMBH) 21. Oktober 1982 (1982-10-21) * Zusammenfassung * | 1,11 | |
| | --- | | |
| A | DETLEF BRUMBI: "MEASURING PROCESS AND STORAGE TANK LEVEL WITH RADAR TECHNOLOGY" INTERNATIONAL RADAR CONFERENCE,US,NEW YORK, IEEE, Seite 256-260 XP000529121 ISBN: 0-7803-2121-9 * Seite 258-259 "Influences on measurement" * * Abbildung 6 * | 1,11 | RECHERCHIERTE SACHGEBIETE (Int.Cl.7) G01S G01F |
| | --- | | |
| A | OTTO J: "Radar applications in level measurement, distance measurement and nondestructive material testing" 27TH EUROPEAN MICROWAVE 97 CONFERENCE AND EXHIBITION "BRIDGING THE GAP BETWEEN INDUSTRY AND ACADEMIA". CONFERENCE PROCEEDINGS (IEEE CAT. NO.97TH8317), JERUSALEM, ISRAEL, 8-12 SEPT. 1997, Seiten 1113-1120 vol.2, XP002124595 * Seite 1113, Absätze 1,5 * * Seite 1114, Absatz 2 - Seite 1115, Absatz 4 * | 1,11 | |
| | --- | | |
| | -/-- | | |

Der vorliegende Recherchenbericht wurde für alle Patentansprüche erstellt

| Recherchenort | Abschlußdatum der Recherche | Prüfer |
|---|---|---|
| DEN HAAG | 2. Dezember 1999 | Roost, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**Europäisches Patentamt**

**EUROPÄISCHER RECHERCHENBERICHT**

Nummer der Anmeldung

EP 99 11 3685

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | DE 43 32 071 A (ENDRESS HAUSER GMBH CO) 23. März 1995 (1995-03-23) * Zusammenfassung * ----- | 1,11 | |

**RECHERCHIERTE SACHGEBIETE (Int.Cl.7)**

Der vorliegende Recherchenbericht wurde für alle Patentansprüche erstellt

| Recherchenort | Abschlußdatum der Recherche | Prüfer |
|---|---|---|
| DEN HAAG | 2. Dezember 1999 | Roost, J |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 99 11 3685

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-12-1999

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| DE | 4407369 | A | 14-09-1995 | KEINE | | | |
| DE | 4327333 | A | 16-02-1995 | KEINE | | | |
| DE | 3107444 | A | 21-10-1982 | GB | 2094091 | A,B | 08-09-1982 |
| | | | | US | 4521778 | A | 04-06-1985 |
| DE | 4332071 | A | 23-03-1995 | CA | 2149896 | A,C | 30-03-1995 |
| | | | | DE | 59407280 | D | 17-12-1998 |
| | | | | WO | 9508780 | A | 30-03-1995 |
| | | | | EP | 0670048 | A | 06-09-1995 |
| | | | | JP | 2688290 | B | 08-12-1997 |
| | | | | JP | 7509071 | T | 05-10-1995 |
| | | | | US | 5614911 | A | 25-03-1997 |

EPO FORM P0461

Für nähere Einzelheiten zu diesem Anhang : siehe Amtsblatt des Europäischen Patentamts, Nr. 12/82